# EUROPEAN PATENT APPLICATION

(11) **EP 4 838 846 A1**
(43) Date of publication of application: **11.11.2026**
(21) Application number: 24921599.7
(22) Date of filing: 05.11.2024
(51) Int. Cl.: H04L 27/26

(54) **DATA TRANSMISSION METHOD, AND DEVICE AND STORAGE MEDIUM**

(30) Priority: 01.02.2024 CN 202410145199
(71) Applicant: ZTE Corporation, Shenzhen, Guangdong 518057 (CN)
(72) Inventor: XIN, Yu, Shenzhen, Guangdong 518057 (CN); BAO, Tong, Shenzhen, Guangdong 518057 (CN); HUA, Jian, Shenzhen, Guangdong 518057 (CN)
(74) Representative: Aipex B.V.
(86) International application number: PCT/CN2024/129903
(87) International publication number: WO 2025/161575

(57) **Abstract**

Provided are a data transmission method, a device, and a storage medium. The method includes performing convolution modulation on a first data sequence and a second data sequence to obtain a third data sequence; combining the first data sequence and the third data sequence to form a fourth data sequence; and transmitting the fourth data sequence on a physical time-frequency resource. The first data sequence and the second data sequence are pre-generated, and values of two non-zero elements in the second data sequence are complex conjugates of each other and are different from each other.

## Description

### TECHNICAL FIELD

The present application relates to the field of communication technologies, specifically a data transmission method, a device, and a storage medium.

### BACKGROUND

In high-frequency scenarios, path loss and shadow fading are relatively large. Therefore, the signal-to-noise ratio (SNR) in some areas at a cell edge is very low. In addition, in high-frequency scenarios, the efficiency of a power amplifier (PA) is relatively low. To improve the SNR and reduce the battery power consumption of a user equipment (UE), it is required that the peak-to-average power ratio (PAPR) of a signal transmitted by the UE be relatively low.

In a massive machine-type communication (mMTC) scenario, some user equipment is expected to significantly reduce battery power consumption, for example, to achieve a battery life of more than ten years. Therefore, to improve the PA efficiency of such UE, it is required that the PAPR of the transmitted signal be relatively low. Under the condition of non-orthogonal access of a large number of users, the signal to interference plus noise ratio (SINR) is very low. Therefore, there is an urgent need for a signal modulation scheme with low modulation and coding scheme (MCS) and low PAPR.

Although a discrete Fourier transform-spread-orthogonal frequency division multiplexing (DFT-s-OFDM) signal has a relatively low PAPR, it cannot meet the requirements of application scenarios requiring even lower PAPR in 6G. Therefore, how to design a modulation scheme with a reduced PAPR is an urgent problem to be solved.

### SUMMARY

In view of this, embodiments of the present application provide a data transmission method, a device, and a storage medium, effectively reducing the PAPR of a signal modulation scheme.

Embodiments of the present application provide a data transmission method. The method includes performing convolution modulation on a first data sequence and a second data sequence to obtain a third data sequence; combining the first data sequence and the third data sequence to form a fourth data sequence; and transmitting the fourth data sequence on a physical time-frequency resource. The first data sequence and the second sequence are pre-generated, and values of two non-zero elements in the second data sequence are complex conjugates of each other and are different from each other.

Embodiments of the present application provide a communication device. The communication device includes a memory and at least one processor.

The memory is configured to store at least one program.

When executed by the at least one processor, the at least one program causes the least one processor to perform the method of any previous embodiment.

Embodiments of the present application provide a storage medium storing a computer program which, when executed by a processor, causes the processor to perform the method of any previous embodiment.

### BRIEF DESCRIPTION OF DRAWINGS

FIG. 1 is a flowchart of a data transmission method according to embodiments of the present application.
FIG. 2 is a diagram illustrating the configuration of a constellation diagram according to embodiments of the present application.
FIG. 3 is a diagram illustrating the configuration of a first data sequence according to embodiments of the present application.
FIG. 4 is a diagram illustrating an implementation of a multipath delay operation according to embodiments of the present application.
FIG. 5 is a diagram illustrating waveform modulation performed on a fourth data sequence according to embodiments of the present application.
FIG. 6 is a block diagram of a data transmission apparatus according to embodiments of the present application.
FIG. 7 is a diagram illustrating the structure of a communication device according to embodiments of the present application.

### DETAILED DESCRIPTION

Embodiments of the present application are described hereinafter in conjunction with the drawings. The present application is described below in conjunction with embodiments and the drawings. The embodiments described below are intended to explain the present application and not to limit the scope of the present application.

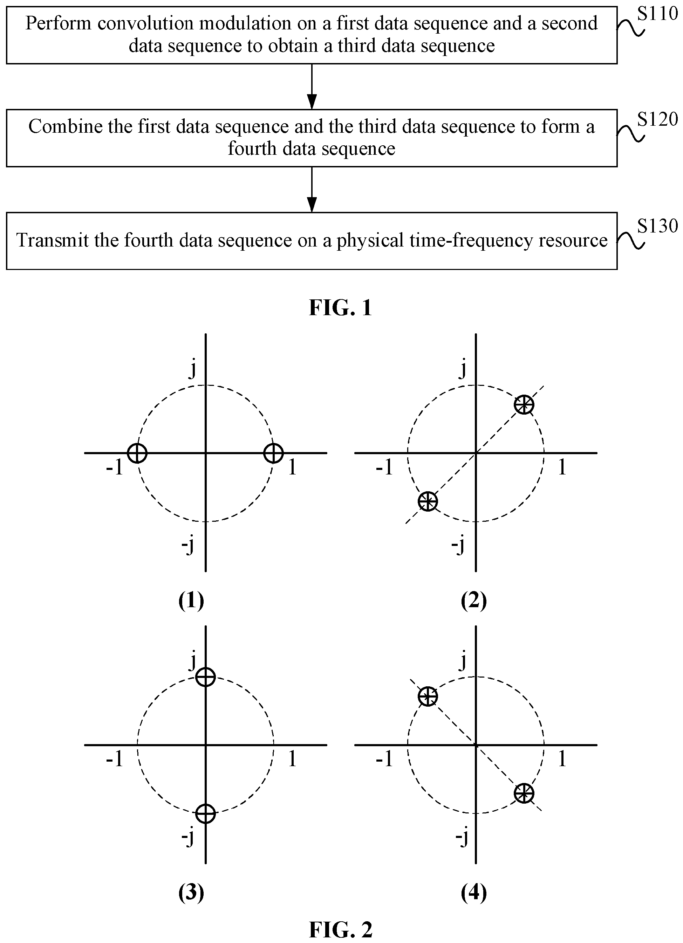

In an embodiment, FIG. 1 is a flowchart of a data transmission method according to embodiments of the present application. This embodiment is applied to a scenario of designing a signal modulation scheme with a reduced PAPR. As shown in FIG. 1, this embodiment includes S110 to S130.

In S110, convolution modulation is performed on a first data sequence and a second data sequence to obtain a third data sequence.

The first data sequence and the second data sequence are pre-generated, and values of two non-zero elements in the second data sequence are complex conjugates of each other and are different from each other. In an example, the first data sequence, the second data sequence, and the third data sequence are all time-domain data. In an example, the second data sequence includes two non-zero elements. Values of the two non-zero elements are complex conjugates of each other and are different from each other.

In S120, the first data sequence and the third data sequence are combined to form a fourth data sequence.

The process of combining the first data sequence and the third data sequence may be understood as a process of inserting each element of the third data sequence between every two elements of the first data sequence or inserting each element of the first data sequence between every two elements of the third data sequence to obtain a fourth data sequence so that elements originally in the first data sequence remain orthogonal and do not interfere with each other, thereby enabling the fourth data sequence to have a relatively low peak-to-average power ratio. In an example, the fourth data sequence is also time-domain data.

In S130, the fourth data sequence is transmitted on a physical time-frequency resource.

In an embodiment, the two non-zero elements of the second data sequence are a first element and a second element.

In an embodiment, the modulus value of the first element is equal to the modulus value of the second element. In an example, the modulus value of the first element and the modulus value of the second element may be $\frac{\sqrt{2}}{2}$.

In an embodiment, the complex phase of the first element is opposite to the complex phase of the second element. The complex phase of the first element refers to the phase of a complex number corresponding to the first element, and the complex phase of the second element refers to the phase of a complex number corresponding to the second element. In an example, the complex phase of the first element is opposite to the complex phase of the second element, which may be understood as that the sum of the complex phase of the first element and the complex phase of the second element is 0.

In an embodiment, the complex phase of the first element and the complex phase of the second element each include $\frac{π}{4}$ or $- \frac{π}{4}$; and the complex phase of the ratio of the first element to the second element is $\pm \frac{π}{2}$. In an example, when the complex phase of the first element is $\frac{π}{4}$, the complex phase of the second element is $- \frac{π}{4}$. In an example, when the complex phase of the first element is $- \frac{π}{4}$, the complex phase of the second element is $\frac{π}{4}$.

In an embodiment, the second data sequence includes one set of the following sets of elements: $\frac{1 - j}{2} , \frac{1 + j}{2}$; or $\frac{1 + j}{2} , \frac{1 - j}{2}$. In an example, when the value of the first element is $\frac{1 - j}{2}$, the value of the second element is $\frac{1 + j}{2}$. In an example, when the value of the first element is $\frac{1 + j}{2}$, the value of the second element is $\frac{1 - j}{2}$.

In an embodiment, the sum of the first element and the second element is equal to 1. In an example, the sum of the value of the first element and the value of the second element is 1.

In an embodiment, the data transmission method also includes performing constellation modulation on a binary data sequence to obtain the first data sequence. The binary data sequence and the first data sequence each include at least two elements. The binary data sequence is a data sequence including 0 and 1. The number of elements in the binary data sequence is greater than 1. The constellation modulation may include, but is not limited to, binary phase shift keying (BPSK) constellation modulation. In an example, the binary data sequence may be pre-generated is subjected to BPSK constellation modulation to obtain the first data sequence.

In an embodiment, the first data sequence is a binary phase shift keying (BPSK) modulated sequence.

In an embodiment, the first data sequence includes: constellation-modulated data; or constellation-modulated data and reference signal data. The number of reference signal data elements may be at least one. Both the reference signal data and the constellation-modulated data use BPSK modulation.

In an embodiment, combining the first data sequence and the third data sequence to form the fourth data sequence includes one of the following: inserting each element of the third data sequence between every two elements of the first data sequence; or inserting each element of the first data sequence between every two elements of the third data sequence. An element remaining after the insertion is placed at the end or the beginning of the fourth data sequence.

In an embodiment, in the fourth data sequence, elements originally in the first data sequence are not adjacent to each other, and elements originally in the third data sequence are not adjacent to each other. In the generated fourth data sequence, elements originally in the first data sequence are not adjacent to each other, and elements originally in the third data sequence are not adjacent to each other.

In an embodiment, the convolution modulation includes: circular convolution or a multipath delay operation.

In an embodiment, when the convolution modulation includes the multipath delay operation and the second data sequence includes the two non-zero elements, the two non-zero elements in the second data sequence are coefficients of two delay paths. By way of example, it is assumed that the second data sequence includes two non-zero elements, denoted as [a, c], where a and c represent coefficients of two delay paths.

In an embodiment, the delay difference of the delay path corresponding to the first element in the second data sequence is 0, and the delay difference of the delay path corresponding to the second element in the second data sequence is 1. By way of example, assuming that the first element is a and the second element is c, the delay difference of the delay path corresponding to the first-position element (that is, the first element) in the second data sequence is 0; and the delay difference of the delay path corresponding to the second-position element (that is, the second element) in the second data sequence is 1.

In an embodiment, performing convolution modulation on the first data sequence and the second data sequence to obtain the third data sequence includes performing a multipath circular delay operation with a delay path of a first value on the first data sequence to obtain the third data sequence, where the first value is the sum of the following products: the product of the first element in the second data sequence and the delay path corresponding to the first element and the product of the second element in the second data sequence and the delay path corresponding to the second element. In an example, the first value may be a*D*⁰ + c*D*¹. Correspondingly, the first data sequence undergoes a multipath circular delay operation with a delay path of a*D*⁰ + c*D*¹ to obtain the third data sequence. *D*⁰ Here *D*⁰ corresponds to a delay path with a delay difference of 0 (that is, no delay), and *D*¹ corresponds to a delay path with a delay difference of 1. In the first data sequence, the distance between adjacent elements is equal to a delay difference of ±1.

In an embodiment, performing convolution modulation on the first data sequence and the second data sequence to obtain the third data sequence includes performing circular convolution on the first data sequence and the second data sequence to obtain the third data sequence, where the coefficient of a delay path with a delay difference of 0 is equal to the first element in the second data sequence, and the coefficient of a delay path with a delay difference of 1 is equal to the second element in the second data sequence. By way of example, the two non-zero elements in the second data sequence are denoted as [d(0), d(1)], the first element is denoted as a, and the second element is denoted as c, where d(0) = a and d(1) = c. The first data sequence and the data sequence [d(0), d(1)] may be subjected to circular convolution to obtain the corresponding third data sequence.

In an embodiment, performing convolution modulation on the first data sequence and the second data sequence to obtain the third data sequence includes performing circular convolution on the first data sequence and the second data sequence to obtain the third data sequence, where in the second data sequence, the first-position element is the first element, the second-position element is the second element, and other-position elements are 0; and the length of the second data sequence is equal to the length of the first data sequence. Assuming that the second data sequence is denoted as a data sequence [d(v)], the first element is denoted as a, and the second element is denoted as c, in the second data sequence, the first-position element satisfies d(0) = a, the second-position element satisfies d(1) = c, and other-position elements satisfy d(v) = 0, where v = 0, 1, 2, ..., V-1; and V is equal to the length of the first data sequence.

In an embodiment, performing convolution modulation on the first data sequence and the second data sequence to obtain the third data sequence includes performing convolution modulation on the first data sequence and the second data sequence to obtain the third data sequence, where the second data sequence includes the same number of elements as the first data sequence. It is assumed that non-zero elements in the second data sequence are denoted as [a, c]. After appropriate zero padding is performed on [a, c], the second data sequence [d(v)] including zero elements and non-zero elements is formed. Then, the first data sequence and the second data sequence [d(v)] are subjected to convolution modulation to obtain the third data sequence.

In an embodiment, the data transmission method also includes multiplying the fourth data sequence by a preconfigured complex constant to obtain a new fourth data sequence, where the fourth data sequence is subjected to at least one of the following operations: adding a reference sequence; Fourier transform; frequency-domain shaping; inverse Fourier transform; or filtering. In an example, the fourth data sequence may be subjected to a Fourier transform, frequency-domain shaping, and an inverse Fourier transform in sequence to obtain a new fourth data sequence; or the fourth data sequence may be subjected to a Fourier transform, frequency-domain shaping, an inverse Fourier transform, and filtering in sequence to obtain a new fourth data sequence, and then the new fourth data sequence is transmitted on a physical time-frequency resource.

It is to be noted that in the following examples, the data modulation process is described using an example in which the second data sequence includes two non-zero elements (that is, the first element and the second element), where the first element is denoted as a, and the second element is denoted as c.

Example One: This example describes performing convolution modulation on a first data sequence and a second data sequence including two non-zero elements [a, c].

In this example, convolution modulation is performed on the first data sequence and the second data sequence including two non-zero elements [a, c] to form a third data sequence, and the first data sequence and the third data sequence are combined to form a fourth data sequence. The element a and the element c of the two non-zero elements [a, c] in the second data sequence satisfy a = conjugate(c), and a ≠ c. conjugate( ) denotes a conjugate operation. By way of example, Table 1 lists the cases where the second data sequence includes two non-zero elements [a, c].

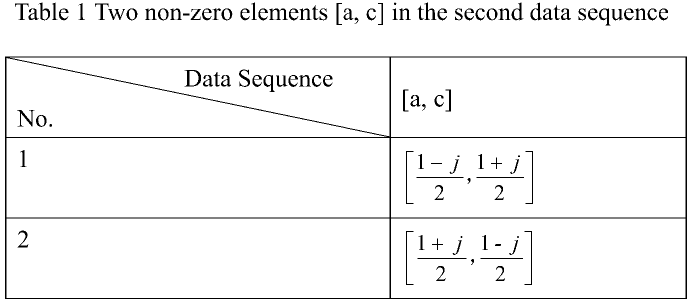

The element a and the element c of the two non-zero elements [a, c] in the second data sequence have the following characteristics:
(1) $module \left(a\right) = module \left(c\right) = \frac{\sqrt{2}}{2} . module \left(\right)$ denotes a modulus operation.
(2) φ(a) = -φ(c) = ±π/4. φ(a/c) = ±π/2. φ( ) denotes the phase of a complex number.
(3) a + c = 1.

Example Two: This example describes the process of forming the first data sequence [x(i)].

A binary data sequence [b(m)] including 0 and 1 is subjected to constellation modulation to form the first data sequence [x(i)]. In this example, the first data sequence [x(i)] is a BPSK-modulated sequence, and the constellation point set of the first data sequence [x(i)] is [exp(j * θ), exp(j * (pi + θ))]. The modulus value of the two constellation points in the constellation point set is equal to 1. The phase difference between the two constellation points is pi. FIG. 2 is a diagram illustrating the configuration of a constellation diagram according to embodiments of the present application.

As shown in (1) of FIG. 2, in the case where θ = 0, the constellation point set of the first data sequence [x(i)] is [1, -1].

As shown in (2) of FIG. 2, in the case where θ = pi/4, the constellation point set of the first data sequence [x(i)] is $\left[\frac{1 + j}{\sqrt{2}}, \frac{- 1 - j}{\sqrt{2}}\right]$.

As shown in (3) of FIG. 2, in the case where θ = pi/2, the constellation point set of the first data sequence [x(i)] is [j, -j].

As shown in (4) of FIG. 2, in the case where θ = 3*pi/4, the constellation point set of the first data sequence [x(i)] is $\left[\frac{- 1 + j}{\sqrt{2}}, \frac{1 - j}{\sqrt{2}}\right]$.

Example Three: This example describes that the first data sequence [x(i)] includes reference signal data and constellation-modulated data.

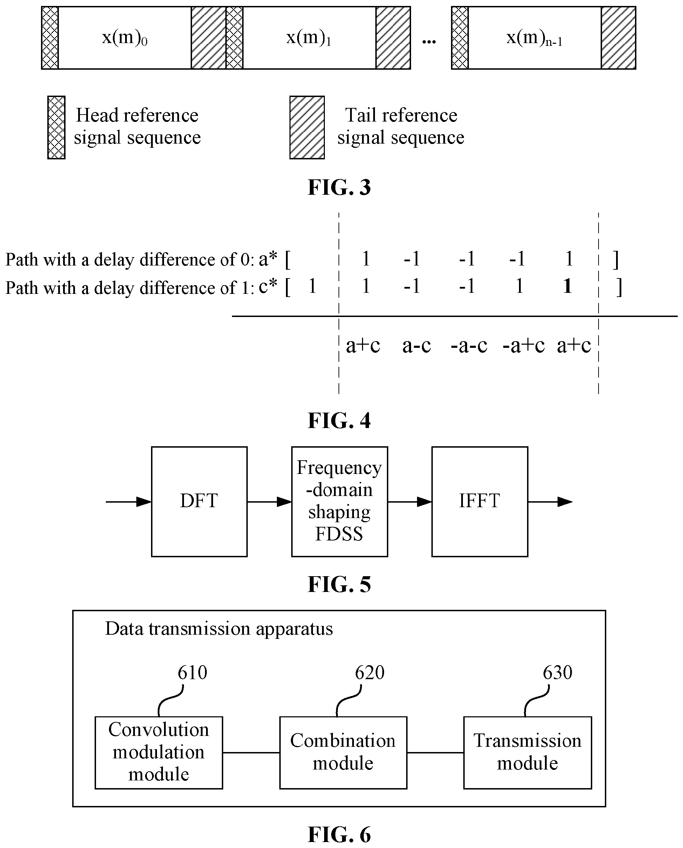

FIG. 3 is a diagram illustrating the configuration of a first data sequence according to embodiments of the present application. As shown in FIG. 3, it is assumed that there are n OFDM symbols, each OFDM symbol includes reference signal data and constellation-modulated data, the same head reference signal sequence is inserted at the head of each OFDM symbol, and the same tail reference signal sequence is inserted at the tail of each OFDM symbol. Both the reference signal data and the constellation-modulated data use BPSK modulation. The first data sequence [x(i)] is transmitted on OFDM symbols.

Example four: This example describes performing convolution modulation on a BPSK-modulated first data sequence and a second data sequence including two non-zero elements [a, c].

In this example, convolution modulation is performed on the first data sequence and the second data sequence including two non-zero elements [a, c] to form a third data sequence, and the first data sequence and the third data sequence are combined to form a fourth data sequence. The convolution modulation process is as follows:

(1) First, a binary data sequence [b(m)] including 0 and 1 is subjected to BPSK constellation modulation to form the first data sequence [x(i)].

(2) Then circular convolution is performed on the first data sequence [x(i)] and the second data sequence including two non-zero elements [a, c] to form the third data sequence.

(3) Then each element of the third data sequence is inserted between every two elements of the first data sequence to form the fourth data sequence. The element remaining after the insertion is placed at the end or the beginning of the fourth data sequence.

Example five: This example describes performing convolution modulation on a BPSK-modulated first data sequence and a second data sequence including two non-zero elements [a, c].

In this example, convolution modulation is performed on the first data sequence and the second data sequence including two non-zero elements [a, c] to form a third data sequence, and the first data sequence and the third data sequence are combined to form a fourth data sequence. The convolution modulation process is as follows:
(1) First, a binary data sequence [b(m)] including 0 and 1 is subjected to BPSK constellation modulation to form the first data sequence [x(i)]. It is assumed that [x(i)] = [1, 1, - 1, -1, 1].
(2) Then circular convolution is performed on the first data sequence [x(i)] and the second data sequence including two non-zero elements [a, c] to form the third data sequence. Assuming that the two non-zero elements [a, c] in the second data sequence are $\left[\frac{1 - j}{2}, \frac{1 + j}{2}\right]$, the third data sequence is:
   $\left[1,1,-1,-1,1\right] ⊗ \left[\frac{1 - j}{2}, \frac{1 + j}{2}\right] = \left[1,-j,-1, j,1\right]$
(3) Then each element of the third data sequence is inserted between every two elements of the first data sequence to form the fourth data sequence: [1, 1, 1, -j, -1, -1, -1, j, 1, 1].

Example six: This example describes performing convolution modulation on a BPSK-modulated first data sequence and a second data sequence including two non-zero elements [a, c].

In this example, convolution modulation is performed on the first data sequence and the second data sequence including two non-zero elements [a, c] to form a third data sequence, and the first data sequence and the third data sequence are combined to form a fourth data sequence. The convolution modulation process is as follows:
(1) First, a binary data sequence [b(m)] including 0 and 1 is subjected to BPSK constellation modulation to form the first data sequence [x(i)]. It is assumed that [x(i)] = [1, 1, - 1, -1, 1].
(2) Then circular convolution is performed on the first data sequence [x(i)] and the second data sequence including two non-zero elements [a, c] to form the third data sequence. Assuming that the two non-zero elements [a, c] in the second data sequence are $\left[\frac{1 + j}{2}, \frac{1 - j}{2}\right]$, the third data sequence is:
   $\left[1,1,-1,-1,1\right] ⊗ \left[\frac{1 + j}{2}, \frac{1 - j}{2}\right] = \left[1, j,-1,-j,1\right]$
(3) Then each element of the third data sequence is inserted between every two elements of the first data sequence to form the fourth data sequence: [1, 1, 1, j, -1, -1, -1, -j, 1, 1].

Example seven: This example describes performing convolution modulation on a BPSK-modulated first data sequence and a second data sequence including two non-zero elements [a, c].

In this example, convolution modulation is performed on the first data sequence and the second data sequence including two non-zero elements [a, c] to form a third data sequence, and the first data sequence and the third data sequence are combined to form a fourth data sequence. The convolution modulation process is as follows:
(1) First, a binary data sequence [b(m)] including 0 and 1 is subjected to BPSK constellation modulation to form the first data sequence [x(i)]. It is assumed that $\left[x\left(i\right)\right] = \left[\frac{1 + j}{\sqrt{2}}, \frac{1 + j}{\sqrt{2}}, \frac{- 1 - j}{\sqrt{2}}, \frac{- 1 - j}{\sqrt{2}}, \frac{1 + j}{\sqrt{2}}\right]$ .
(2) Then circular convolution is performed on the first data sequence [x(i)] and the second data sequence including two non-zero elements [a, c] to form the third data sequence. Assuming that the two non-zero elements [a, c] in the second data sequence are $\left[\frac{1 - j}{2}, \frac{1 + j}{2}\right]$, the third data sequence is:
   $\left[\frac{1 + j}{\sqrt{2}}, \frac{1 + j}{\sqrt{2}}, \frac{- 1 - j}{\sqrt{2}}, \frac{- 1 - j}{\sqrt{2}}, \frac{1 + j}{\sqrt{2}}\right] ⊗ \left[\frac{1 - j}{\sqrt{2}}, \frac{1 + j}{\sqrt{2}}\right] = \left[\frac{1 + j}{\sqrt{2}}, \frac{1 - j}{\sqrt{2}}, \frac{- 1 - j}{\sqrt{2}}, \frac{- 1 + j}{\sqrt{2}}, \frac{1 + j}{\sqrt{2}}\right]$
(3) Then each element of the third data sequence is inserted between every two elements of the first data sequence to form the fourth data sequence:
   $\left[\frac{1 + j}{\sqrt{2}}, \frac{1 + j}{\sqrt{2}}, \frac{1 + j}{\sqrt{2}}, \frac{1 - j}{\sqrt{2}}, \frac{- 1 - j}{\sqrt{2}}, \frac{- 1 - j}{\sqrt{2}}, \frac{- 1 - j}{\sqrt{2}}, \frac{- 1 + j}{\sqrt{2}}, \frac{1 + j}{\sqrt{2}}, \frac{1 + j}{\sqrt{2}}\right]$

Example eight: This example describes performing convolution modulation on a BPSK-modulated first data sequence and a second data sequence including two non-zero elements [a, c].

In this example, convolution modulation is performed on the first data sequence and the second data sequence including two non-zero elements [a, c] to form a third data sequence, and the first data sequence and the third data sequence are combined to form a fourth data sequence. The convolution modulation process is as follows:
(1) First, a binary data sequence [b(m)] including 0 and 1 is subjected to BPSK constellation modulation to form the first data sequence [x(i)]. It is assumed that $\left[x\left(i\right)\right] = \left[\frac{1 + j}{\sqrt{2}}, \frac{1 + j}{\sqrt{2}}, \frac{- 1 - j}{\sqrt{2}}, \frac{- 1 - j}{\sqrt{2}}, \frac{1 + j}{\sqrt{2}}\right]$ .
(2) Then circular convolution is performed on the first data sequence [x(i)] and the second data sequence including two non-zero elements [a, c] to form the third data sequence. Assuming that the two non-zero elements [a, c] in the second data sequence are $\left[\frac{1 + j}{2}, \frac{1 - j}{2}\right]$, the third data sequence is:
   $\left[\frac{1 + j}{\sqrt{2}}, \frac{1 + j}{\sqrt{2}}, \frac{- 1 - j}{\sqrt{2}}, \frac{- 1 - j}{\sqrt{2}}, \frac{1 + j}{\sqrt{2}}\right] ⊗ \left[\frac{1 + j}{\sqrt{2}}, \frac{1 - j}{\sqrt{2}}\right] = \left[\frac{1 + j}{\sqrt{2}}, \frac{- 1 + j}{\sqrt{2}}, \frac{- 1 - j}{\sqrt{2}}, \frac{1 - j}{\sqrt{2}}, \frac{1 + j}{\sqrt{2}}\right]$
(3) Then each element of the third data sequence is inserted between every two elements of the first data sequence to form the fourth data sequence:
   $\left[\frac{1 + j}{\sqrt{2}}, \frac{1 + j}{\sqrt{2}}, \frac{1 + j}{\sqrt{2}}, \frac{- 1 + j}{\sqrt{2}}, \frac{- 1 - j}{\sqrt{2}}, \frac{- 1 - j}{\sqrt{2}}, \frac{- 1 - j}{\sqrt{2}}, \frac{1 - j}{\sqrt{2}}, \frac{1 + j}{\sqrt{2}}, \frac{1 + j}{\sqrt{2}}\right]$

Example nine: This example describes performing convolution modulation on a BPSK-modulated first data sequence and a second data sequence including two non-zero elements [a, c].

In this example, convolution modulation is performed on the first data sequence and the second data sequence including two non-zero elements [a, c] to form a third data sequence, and the first data sequence and the third data sequence are combined to form a fourth data sequence. The convolution modulation process is as follows:
(1) First, a binary data sequence [b(m)] including 0 and 1 is subjected to BPSK constellation modulation to form the first data sequence [x(i)]. It is assumed that [x(i)] = [j, j, -j, -j, j].
(2) Circular convolution is performed on the first data sequence [x(i)] and the second data sequence including two non-zero elements [a, c] to form the third data sequence. Assuming that the two non-zero elements [a, c] in the second data sequence are $\left[\frac{1 - j}{2}, \frac{1 + j}{2}\right]$, the third data sequence is:
   $\left[j, j,-j,-j, j\right] ⊗ \left[\frac{1 - j}{2}, \frac{1 + j}{2}\right] = \left[j,1,-j,-1, j\right]$
(3) Then each element of the third data sequence is inserted between every two elements of the first data sequence to form the fourth data sequence: [j, j, j, 1, -j, -j, -j, -1, j, j].

Example ten: This example describes performing convolution modulation on a BPSK-modulated first data sequence and a second data sequence including two non-zero elements [a, c].

In this example, convolution modulation is performed on the first data sequence and the second data sequence including two non-zero elements [a, c] to form a third data sequence, and the first data sequence and the third data sequence are combined to form a fourth data sequence. The convolution modulation process is as follows:
(1) First, a binary data sequence [b(m)] including 0 and 1 is subjected to BPSK constellation modulation to form the first data sequence [x(i)]. It is assumed that [x(i)] = [j, j, -j, -j, j].
(2) Then circular convolution is performed on the first data sequence [x(i)] and the second data sequence including two non-zero elements [a, c] to form the third data sequence. Assuming that the two non-zero elements [a, c] in the second data sequence are $\left[\frac{1 + j}{2}, \frac{1 - j}{2}\right]$, the third data sequence is:
   $\left[j, j,-j,-j, j\right] ⊗ \left[\frac{1 + j}{2}, \frac{1 - j}{2}\right] = \left[j,-1,-j,1, j\right]$
(3) Then each element of the third data sequence is inserted between every two elements of the first data sequence to form the fourth data sequence: [j, j, j, -1, -j, -j, -j, 1, j, j].

Example eleven: This example describes performing convolution modulation on a BPSK-modulated first data sequence and a second data sequence including two non-zero elements [a, c].

In this example, convolution modulation is performed on the first data sequence and the second data sequence including two non-zero elements [a, c] to form a third data sequence, and the first data sequence and the third data sequence are combined to form a fourth data sequence. The convolution modulation process is as follows:
(1) First, a binary data sequence [b(m)] including 0 and 1 is subjected to BPSK constellation modulation to form the first data sequence [x(i)].
(2) Then circular convolution is performed on the first data sequence [x(i)] and the second data sequence including two non-zero elements [a, c] to form the third data sequence.
(3) Then each element of the first data sequence is inserted between every two elements of the third data sequence to form the fourth data sequence. The element remaining after the insertion is placed at the end or the beginning of the fourth data sequence.

Example twelve: This example describes performing convolution modulation on a BPSK-modulated first data sequence and a second data sequence including two non-zero elements [a, c].

In this example, convolution modulation is performed on the first data sequence and the second data sequence including two non-zero elements [a, c] to form a third data sequence, and the first data sequence and the third data sequence are combined to form a fourth data sequence. The convolution modulation process is as follows:
(1) First, a binary data sequence [b(m)] including 0 and 1 is subjected to BPSK constellation modulation to form the first data sequence [x(i)]. It is assumed that [x(i)] = [1, 1, - 1, -1, 1].
(2) Then circular convolution is performed on the first data sequence [x(i)] and the second data sequence including two non-zero elements [a, c] to form the third data sequence. Assuming that the two non-zero elements [a, c] in the second data sequence are $\left[\frac{1 - j}{2}, \frac{1 + j}{2}\right]$, the third data sequence is:
   $\left[1,1,-1,-1,1\right] ⊗ \left[\frac{1 - j}{2}, \frac{1 + j}{2}\right] = \left[1,-j,-1, j,1\right]$
(3) Then each element of the first data sequence is inserted between every two elements of the third data sequence to form the fourth data sequence: [1, 1, -j, -1, -1, -1, j, 1, 1, 1].

Example thirteen: This example describes performing convolution modulation on a BPSK-modulated first data sequence and a second data sequence including two non-zero elements [a, c].

In this example, a binary data sequence [b(m)] including 0 and 1 is subjected to BPSK constellation modulation to form the first data sequence [x(i)], convolution modulation is performed on the first data sequence and the second data sequence including two non-zero elements [a, c] to form a third data sequence, and the first data sequence and the third data sequence are combined to form a fourth data sequence.

The first data sequence and the third data sequence are combined in the following two manners:
(1) Each element of the third data sequence is inserted between every two elements of the first data sequence to form the fourth data sequence [s(k)]₁.
(2) Each element of the first data sequence is inserted between every two elements of the third data sequence to form the fourth data sequence [s(k)]₂.

The fourth data sequence [s(k)]₁ and the fourth data sequence [s(k)]₂ are the same data sequence and differ only by a cyclic shift of data elements.

Example fourteen: This example describes performing convolution modulation on a BPSK-modulated first data sequence and a second data sequence including two non-zero elements [a, c].

In this example, convolution modulation is performed on the first data sequence and the second data sequence including two non-zero elements [a, c] to form a third data sequence, and the first data sequence and the third data sequence are combined to form a fourth data sequence. The convolution modulation process is as follows:
(1) First, a binary data sequence [b(m)] including 0 and 1 is subjected to BPSK constellation modulation to form the first data sequence [x(i)].
(2) Then the first data sequence is subjected to a multipath circular delay operation with a delay path of *aD*⁰ + *cD*¹ to form the third data sequence.

The element a and the element c of the two non-zero elements [a, c] in the second data sequence are coefficients of two delay paths. The delay difference of the delay path corresponding to the first element a is 0. The delay difference of the delay path corresponding to the second element b is 1. *D*⁰ corresponds to a delay path with a delay difference of 0 (that is, no delay). *D*¹ corresponds to a delay path with a delay difference of 1.

(3) Then each element of the third data sequence is inserted between every two elements of the first data sequence to form the fourth data sequence. Alternatively, each element of the first data sequence is inserted between every two elements of the third data sequence to form the fourth data sequence.

Example fifteen: This example describes performing convolution modulation on a BPSK-modulated first data sequence and a second data sequence including two non-zero elements [a, c].

FIG. 4 is a diagram illustrating an implementation of a multipath delay operation according to embodiments of the present application. As shown in FIG. 4, it is assumed that the BPSK-modulated first data sequence [x(i)] is [1, 1, -1, -1, 1]. The sequence passes through a delay path with a delay difference of 0 and a delay path with a delay difference of 1 to form a third data sequence.

Assuming that the BPSK-modulated first data sequence [x(i)] is [1, 1, -1, -1, 1] and the two non-zero elements [a, c] in the second data sequence satisfy $\left[a, c\right] = \left[\frac{1 - j}{2}, \frac{1 + j}{2}\right]$, the second data sequence is [a+c, a-c, -a-c, -a+c, a+c] = [1, -j, -1, j, 1].

Example sixteen: This example describes performing convolution modulation on a BPSK-modulated first data sequence and a second data sequence including two non-zero elements [a, c].

In this example, convolution modulation is performed on the first data sequence and the second data sequence including two non-zero elements [a, c] to form a third data sequence, and the first data sequence and the third data sequence are combined to form a fourth data sequence. The convolution modulation process is as follows:
(1) First, the first data sequence [x(i)] is formed after BPSK constellation modulation.
(2) Then circular convolution is performed on the first data sequence [x(i)] and the second data sequence [d(v)]. In the second data sequence, and the first element d(0) = a, the second element d(1) = c. When v takes values other than 0 and 1, d(v) = 0, v = 0, 1, 2, ..., V-1. V is equal to the length of the first data sequence. The value range of i is 0, 1, 2, ..., M-2, I-1. That is, the third data sequence is:
   $x \left(i\right) ⊗ d \left(ν\right) = \left[x\left(0\right),x\left(1\right),x\left(2\right),…,x\left(M-2\right),x\left(I-1\right)\right] ⊗ \left[a,c,0,…,0,0\right]$
(3) Then each element of the third data sequence is inserted between every two elements of the first data sequence to form the fourth data sequence. Alternatively, each element of the first data sequence is inserted between every two elements of the third data sequence to form the fourth data sequence.

Example seventeen: This example describes performing waveform modulation on a third data sequence.

FIG. 5 is a diagram illustrating waveform modulation performed on a fourth data sequence according to embodiments of the present application. As shown in FIG. 5, the fourth data sequence undergoes discrete Fourier transform (DFT), resource mapping, frequency-domain shaping, and data 0 being placed at positions of some subcarriers to achieve oversampled inverse discrete Fourier transform (IDFT) and digital-to-analog conversion, and then is transmitted on a radio frequency link.

In other embodiments, reference sequence data is added to both ends of the fourth data sequence or is subjected to filtering after inverse fast Fourier transform (IFFT).

In an embodiment, FIG. 6 is a block diagram of a data transmission apparatus according to embodiments of the present application. As shown in FIG. 6, the data transmission apparatus of this embodiment includes a convolution modulation module 610, a combination module 620, and a transmission module 630.

The convolution modulation module 610 is configured to perform convolution modulation on a first data sequence and a second data sequence to obtain a third data sequence.

The first data sequence and the second data sequence are pre-generated, and values of two adjacent non-zero elements in the second data sequence are complex conjugate to each other and are different from each other.

The combination module 620 is configured to combine the first data sequence and the third data sequence to form a fourth data sequence.

The transmission module 630 is configured to transmit the fourth data sequence on a physical time-frequency resource.

In an embodiment, the non-zero elements in the second data sequence include a first element and a second element. In an embodiment, the modulus value of the first element is equal to the modulus value of the second element.

In an embodiment, the complex phase of the first element is opposite to the complex phase of the second element.

In an embodiment, the complex phase of the first element and the complex phase of the second element each include $\frac{π}{4}$ or $- \frac{π}{4}$; and the complex phase of the ratio of the first element to the second element is $\pm \frac{π}{2}$.

In an embodiment, the second data sequence includes one set of the following sets of elements: $\frac{1 - j}{2} , \frac{1 + j}{2}$; or $\frac{1 + j}{2} , \frac{1 - j}{2}$.

In an embodiment, the sum of the first element and the second element is equal to 1.

In an embodiment, the data transmission apparatus also includes a constellation modulation module configured to perform constellation modulation on a pre-generated binary data sequence to obtain the first data sequence.

In an embodiment, the first data sequence is a binary phase shift keying (BPSK) modulated sequence.

In an embodiment, the first data sequence includes one of the following: constellation-modulated data; or constellation-modulated data and reference signal data.

In an embodiment, combining the first data sequence and the third data sequence to form the fourth data sequence includes one of the following: inserting each element of the third data sequence between every two elements of the first data sequence; or inserting each element of the first data sequence between every two elements of the third data sequence.

An element remaining after the insertion is placed at the end or the beginning of the fourth data sequence.

In an embodiment, in the fourth data sequence, elements originally in the first data sequence are not adjacent to each other, and elements originally in the third data sequence are not adjacent to each other.

In an embodiment, the convolution modulation includes: circular convolution or a multipath delay operation.

In an embodiment, when the convolution modulation includes the multipath delay operation and the second data sequence includes the two non-zero elements, the two non-zero elements in the second data sequence are coefficients of two delay paths.

In an embodiment, the delay difference of the delay path corresponding to the first element in the second data sequence is 0, and the delay difference of the delay path corresponding to the second element in the second data sequence is 1.

In an embodiment, performing convolution modulation on the first data sequence and the second data sequence to obtain the third data sequence includes performing a multipath circular delay operation with a delay path of a first value on the first data sequence to obtain the third data sequence, where the first value is the sum of the following products: the product of the first element in the second data sequence and the delay path corresponding to the first element and the product of the second element in the second data sequence and the delay path corresponding to the second element.

In an embodiment, performing convolution modulation on the first data sequence and the second data sequence to obtain the third data sequence includes performing circular convolution on the first data sequence and the second data sequence to obtain the third data sequence, where the coefficient of a delay path with a delay difference of 0 is equal to the first element in the second data sequence, and the coefficient of a delay path with a delay difference of 1 is equal to the second element in the second data sequence.

In an embodiment, performing convolution modulation on the first data sequence and the second data sequence to obtain the third data sequence includes performing circular convolution on the first data sequence and the second data sequence to obtain the third data sequence, where in the second data sequence, the first-position element is the first element, the second-position element is the second element, and other-position elements are 0; and the length of the second data sequence is equal to the length of the first data sequence.

In an embodiment, performing convolution modulation on the first data sequence and the second data sequence to obtain the third data sequence includes performing convolution modulation on the first data sequence and the second data sequence to obtain the third data sequence, where the second data sequence includes the same number of elements as the first data sequence.

In an embodiment, the data transmission method also includes multiplying the fourth data sequence by a preconfigured complex constant to obtain a new fourth data sequence, where the fourth data sequence is subjected to at least one of the following operations: adding a reference sequence; Fourier transform; frequency-domain shaping; inverse Fourier transform; or filtering.

The data transmission apparatus of this embodiment is configured to perform the data transmission method of the embodiment shown in FIG. 1. The data transmission apparatus of this embodiment and the data transmission method have similar implementation principles and technical effects, which are not repeated here.

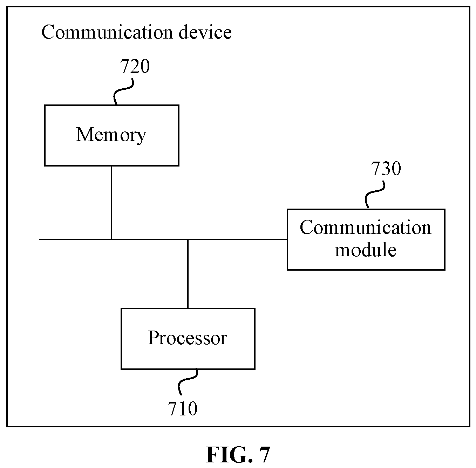

In an embodiment, FIG. 7 is a diagram illustrating the structure of a communication device according to embodiments of the present application. As shown in FIG. 7, the device of the present application includes a processor 710, a memory 720, and a communication module 730. One or more processors 710 may be configured in the device. FIG. 7 uses one processor 710 as an example. One or more memories 720 may be configured in the device. FIG. 7 uses one memory 720 as an example. The processor 710, the memory 720 and the communication module 730 in the device may be connected via a bus or in other manners. FIG. 7 shows the connection via a bus as an example. In this embodiment, the device may be a terminal or a network.

As a computer-readable storage medium, the memory 720 may be configured to store software programs, computer-executable programs and modules, such as program instructions/modules (for example, the convolution modulation module 610, the combination module 620, and the transmission module 630 in the data transmission apparatus) corresponding to the device according to any embodiment of the present application. The memory 720 may include a program storage region and a data storage region. The program storage region may store an operating system and an application program required by at least one function. The data storage region may store data created according to the use of the device. Additionally, the memory 720 may include a high-speed random-access memory and may also include a nonvolatile memory such as at least one disk memory, a flash memory, or another nonvolatile solid-state memory. In some examples, the memory 720 may be remote relative to the processor 710 and connectable to the device via a network. Examples of the network include, but are not limited to, the Internet, an intranet, a local area network, a mobile communication network, and a combination thereof.

The preceding device may be configured to execute the data transmission method of any preceding embodiment and has the corresponding functions and effects.

Embodiments of the present application provide a storage medium storing computer-executable instructions which, when executed by a computer processor, cause the computer processor to perform a data transmission method. The method includes performing convolution modulation on a first data sequence and a second data sequence to obtain a third data sequence; combining the first data sequence and the third data sequence to form a fourth data sequence; and transmitting the fourth data sequence on a physical time-frequency resource. The first data sequence and the second data sequence are pre-generated, and values of two non-zero elements in the second data sequence are complex conjugate to each other and are different from each other.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology such as, but not limited to, a read-only memory (ROM), a random-access memory (RAM) or an optical memory device and system (a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The preceding describes optional embodiments of the present application that are not intended to limit the present application. For those skilled in the art, the present application may have various modifications and variations. Any modifications, equivalent substitutions, and improvements made within the spirit and principle of the present application are within the scope of the present application.

## Claims

1. A data transmission method, comprising:
performing convolution modulation on a first data sequence and a second data sequence to obtain a third data sequence;
combining the first data sequence and the third data sequence to form a fourth data sequence; and
transmitting the fourth data sequence on a physical time-frequency resource;
wherein the first data sequence and the second data sequence are pre-generated, and values of two non-zero elements in the second data sequence are complex conjugates of each other and are different from each other.

2. The method of claim 1, wherein the two non-zero elements in the second data sequence are a first element and a second element.

3. The method of claim 2, wherein a modulus value of the first element is equal to a modulus value of the second element.

4. The method of claim 2, wherein a complex phase of the first element is opposite to a complex phase of the second element.

5. The method of claim 2, wherein
a complex phase of the first element and a complex phase of the second element each comprise $\frac{π}{4}$ or $- \frac{π}{4}$; and
a complex phase of a ratio of the first element to the second element is $\pm \frac{π}{2}$.

6. The method of claim 2, wherein the second data sequence comprises one set of the following sets of elements: $\frac{1 - j}{2} , \frac{1 + j}{2} ;$ or $\frac{1 + j}{2} , \frac{1 - j}{2} .$

7. The method of claim 2, wherein a sum of the first element and the second element is equal to 1.

8. The method of claim 1, further comprising: performing constellation modulation on a pre-generated binary data sequence to obtain the first data sequence.

9. The method of claim 1 or 8, wherein the first data sequence is a binary phase shift keying (BPSK) modulated sequence.

10. The method of claim 1 or 8, wherein the first data sequence comprises: constellation-modulated data; or constellation-modulated data and reference signal data.

11. The method of claim 1, wherein combining the first data sequence and the third data sequence to form the fourth data sequence comprises:
inserting each element of the third data sequence between every two elements of the first data sequence; or
inserting each element of the first data sequence between every two elements of the third data sequence;
wherein an element remaining after the insertion is placed at the end or the beginning of the fourth data sequence.

12. The method of claim 1 or 11, wherein in the fourth data sequence, elements originally in the first data sequence are not adjacent to each other, and elements originally in the third data sequence are not adjacent to each other.

13. The method of claim 2, wherein the convolution modulation comprises: circular convolution or a multipath delay operation.

14. The method of claim 13, wherein in response to the convolution modulation comprising the multipath delay operation and the second data sequence comprising the two non-zero elements, the two non-zero elements in the second data sequence are coefficients of two delay paths.

15. The method of claim 13, wherein a delay difference of a delay path corresponding to the first element in the second data sequence is 0, and a delay difference of a delay path corresponding to the second element in the second data sequence is 1.

16. The method of claim 13, wherein performing convolution modulation on the first data sequence and the second data sequence to obtain the third data sequence comprises:
performing a multipath circular delay operation with a delay path of a first value on the first data sequence to obtain the third data sequence, wherein the first value is a sum of the following products:
a product of the first element in the second data sequence and a delay path corresponding to the first element; and
a product of the second element in the second data sequence and a delay path corresponding to the second element.

17. The method of claim 13, wherein performing convolution modulation on the first data sequence and the second data sequence to obtain the third data sequence comprises:
performing circular convolution on the first data sequence and the second data sequence to obtain the third data sequence, wherein a coefficient of a delay path with a delay difference of 0 is equal to the first element in the second data sequence, and a coefficient of a delay path with a delay difference of 1 is equal to the second element in the second data sequence.

18. The method of claim 13, wherein performing convolution modulation on the first data sequence and the second data sequence to obtain the third data sequence comprises:
performing circular convolution on the first data sequence and the second data sequence to obtain the third data sequence, wherein in the second data sequence, a first-position element is the first element, a second-position element is the second element, and other-position elements are 0; and a length of the second data sequence is equal to a length of the first data sequence.

19. The method of claim 13, wherein performing convolution modulation on the first data sequence and the second data sequence to obtain the third data sequence comprises:
performing convolution modulation on the first data sequence and the second data sequence to obtain the third data sequence, wherein the second data sequence comprises a same number of elements as the first data sequence.

20. The method of claim 1, further comprising:
multiplying the fourth data sequence by a preconfigured complex constant to obtain a new fourth data sequence, wherein the fourth data sequence is subjected to at least one of the following operations: adding a reference sequence; Fourier transform; frequency-domain shaping; inverse Fourier transform; or filtering.

21. A communication device, comprising a memory and at least one processor, wherein
the memory is configured to store at least one program; and
when executed by the at least one processor, the at least one program causes the least one processor to perform the method of any one of claims 1 to 20.

22. A storage medium storing a computer program which, when executed by a processor, causes the processor to perform the method of any one of claims 1 to 20.
